# EUROPEAN PATENT APPLICATION

(11) **EP 4 574 231 A1**
(43) Date of publication of application: **25.06.2025**
(21) Application number: 23217632.1
(22) Date of filing: 18.12.2023
(51) Int. Cl.: B01D 39/16

(54) **FILTER MATERIAL AND METHOD FOR PROVIDING A FILTER MATERIAL**

(71) Applicant: Johns Manville Europe GmbH, 86399 Bobingen (DE)
(72) Inventor: GRAEBER, Markus, 86163 Augsburg (DE); MEIER, Jörg, 86845 Großaitingen (DE)
(74) Representative: Dörr, Klaus

(57) **Abstract**

A filter material (10), namely a nonwoven material, is provided, wherein the filter material comprises a first filter section (11) and a second filter section (12), the first filter section (10) facing the upstream side (20) of the filter material (10) and the second filter section (12) facing the downstream side (30), wherein the first filter section (11) is if of higher porosity than the second filter section (12), and wherein the first and the second filter section (11, 12) merge into each other along a porosity gradient (G), so that no defined separation surface exists between the sections.

## Description

The invention relates to a filter material and a method for providing such filter material.

Filter materials are used for a variety of technical tasks. Typically, they are used for separating particles from a fluid, i.e. from a liquid or a gas. The particles can be solid particles, they can also be drops of a liquid which is not mixable with the fluid. A filter material usually has an upstream side and a downstream side. On the upstream side, the fluid loaded with the particles meets the filter surface. As the fluid flows through the filter, the particles are retained by the filter. On the downstream side, the fluid leaves the filter material again and is at least partially cleaned, i.e. it now contains an at least reduced amount of the particles, if it is not free from particles. In this context, typically, a distinction is made between surface filtration (separative filtration) and deep filtration (storage filtration).

Most filter materials have, due to the different packing density of the filter material on the inflow and outflow side, the respective fiber structure can take on a separate function. Typically, the fiber structure having a low fiber density on the inflow side serves as a depth filter with a high particle storage capacity. On the outflow side, the high packing density creates a filter with improved filter efficiency. The advantages of the combination are a significantly increased filter service life, with less manufacturing effort and therefore lower production costs.

The current state of the art is implemented through the use of so-called gradient structures. Coarser fibers are used on the upstream side and finer fibers on the downstream side. The coarse fibers reduce the specific surface area of the fibers on the upstream side and the average pore size increases thereby. This concept increases the dust storage capacity by increasing the number of layers of fibers and the resulting empty space. On the outflow side, the average pore size of the filter is reduced by reducing the fiber diameter and the filter separation efficiency is improved due to the barrier effect of the fiber. The number of fiber layers per height segment and the reduction in pore size achieved thereby determine the filter efficiency.

Fine fiber filter media having a multilayer gradient structure are known, for example, US 10 155 186 B2. The filter media is a fiber web comprising: a first layer and a second layer, wherein each of the first and second layers comprises a plurality of meltblown fibers having an average fiber diameter between about 0.1 microns and about 1.5 microns. The fiber diameter influences the pore size of such filter media which results in different filtering characteristics. While a coarse filter material - having typically a larger pore size - usually provides a high air permeability, finer filter media - having typically a smaller pore size - do provide higher filtering efficiency. Nevertheless, it is usually desired to have a high air permeability as well as high filtering efficiency and a high dust holding capacity.

Hence, it is common practice to use coarser fibers on the upstream side and finer fibers on the downstream side of such filter materials as this results in a structure with a larger pore size on the upstream side and a smaller pore size on the downstream side. For example, US 10 828 587 B2 discloses staple fiber filter media including nanofibers. Particularly, filter media are disclosed, comprising: a first fiber web having an average fiber diameter of less than or equal to about 0.5 microns and a maximum pore size of less than or equal to about 1.0 microns; and a second fiber web having a maximum pore size of greater than or equal to about 3 microns and less than or equal to about 70 microns.

For achieving such filter media comprising several filter layers, wherein the filter layers do have different pore sizes, several layers of filter media are, usually, manufactured individually, then stacked and, subsequently, connected to each other. For example, the layers are laminated to each other. Accordingly, a clearly distinctive separation surface is formed between the so connected layers. However, this can lead to undesirable delamination effects. In particular, when the filter material is pleated, this can be a problem. The purpose of pleating is to achieve improved filtration by increasing the exposed filter surface per square area. But, during the pleating process, the media is subjected to high bending and stretching forces. These mechanical stresses are particularly substantial in two or multiple layer media. Layers comprising distinct fiber diameters show distinct mechanical strength and elasticity. Thus, stress peaks act on the interfaces. At the edged surface of the pleat, a fine fiber layer might rupture or delaminate from a coarse back layer. Such defects can result in a reduction of the filter's efficiency.

However, a mechanically stiff, but nevertheless pleatable, filter material is desired very often.

Accordingly, it is a technical objective to provide a mechanically stiff nonwoven material for filtration. The material shall be pleatable while showing a high air permeability, a high dust holding capacity and a high filtering efficiency. Also, it is in general the technical objective to provide a filtration layer, having a low pressure drop while also providing a good filtration efficiency and particle retention capacity. Further, it is another technical object to provide a filter layer or filter material being pleatable without defects. The filtration media shall be resilient against attrition and wastage induced by defects such as delamination, abrasion, and rupture by the fluid flow and shall show a decreased level of pore clogging.

The object of the present invention, therefore, is a single layer nonwoven filter material (10) having:
(i) a first surface (20) and a second surface (30) and an inner region (13) inbetween the first surface and the second surface,
   wherein
(ii) the inner region (13) having a first section (11) and a second section (12),
(iii) the first section (11) facing the first surface (20) of the filter material (10),
(iv) the second section (12) facing the second surface (30) of the filter material (10),
(v) the first section (11) has a first fiber density and the second filter section (12) has a second fiber density,
(vi) the second fiber density is higher than the first fiber density,
(vii) the fibers forming the inner area (13) and the first section (11) and the second section (12) are the same kind of fibers,
(viii) the thickness of the first section (11) is from 20-80% of the total thickness of the inner region
(ix) the thickness of the second section (12) is from 80-20% of the total thickness of the inner region
(x) the second fiber density is higher than the first fiber density.

The filter material according to the instant invention is a material that is usable for separating particles from a fluid or for coalescence applications, said fluids can be a gas or a liquid. The particles can be solid particles or drops of liquids or e.g. dust particles. For example, the particles can be oil drops and the fluid can be a gaseous fluid, i.e. the fluid to be cleaned can be an oil mist. The size of the particles can vary.

In a preferred embodiment of the instant invention, the filter material has typically an upstream side and a downstream side. In such embodiment, the first surface (20) being the upstream side of the filter material and the second surface (30) being the downstream side of the filter material. Thus, the upstream side is the outer surface of the filter material that faces towards an arriving fluid stream, which is loaded with particles. At that surface (20) the fluid stream Fᵤ enters the filter material and from there passes through the filter. While passing through the filter the particles are retained by the filter material and - in an ideal case - only the fluid is allowed to pass. The so cleared fluid leaves the filter at the downstream side F_{D}. In other words, the downstream side (30) is the side of the filter, which faces the direction in which the fluid flows away from the filter.

### Nonwoven

Nonwoven, sometimes also called nonwoven fabrics, are web structures made by entangling more or less randomly arranged fibers or filaments by mechanical, thermal, chemical or solvent means. Nonwovens can be made from staple fiber and/or continuous fibers such as filaments. Filaments are continuous fiber strands. In other words: nonwovens are typically made of randomly arranged and bonded fibers, wherein the fibers can be short staple fibers or long continuous filament fibers. Preferred examples of nonwovens in this context are spunbond nonwovens and meltblown nonwovens. Spunbond nonwovens are made in one continuous process. Fibers are spun and then directly dispersed into a web, e.g. by the help of a deflector or by the help of a directed air stream. Melt-blown nonwovens are typically produced by extruding melted polymer fibers through a spinneret or die assembly.

The nonwoven filter material of the instant invention is a single layer nonwoven filter material. As used herein the term "single layer" refers to a nonwoven filter material manufactured in a single manufacturing step without manufacturing separate filter material layers and combining, attaching, adhering or compounding these in a subsequent or additional manufacturing step.

The term "single layer" nonwoven shall limit the literal understanding to a nonwoven filter material layer composed of or consisting of one type of polymeric fibers or one homogeneous blend of two or more different fibers, said blend includes polymeric fibers, in particular melt-spun polymer fibers, throughout the thickness of the nonwoven layer.

The aforementioned blend includes, beside the polymeric fibers, in particular melt-spun polymer fibers, other fibers, such as glass fibers or cellulose fibers, typically in an amount of up to 30 wt.-% based on the total weight of the nonwoven.

Instead of the glass fibers, also mineral fibers based on alumino silicate, ceramic, dolomite fibers or fibers of vulcanites, such as e.g. basalt diabase, melaphyre diabase (greenstone) and melaphyres (so-called paleobasalts) can also be used. Glass fibers are preferred however on account of their economic availability.

The glass fibers are not subject to any substantial restriction with regard to the type of glass, so that in principle all types of glass such as E glass, S glass, R glass, and C glass may be used. For economic reasons E glass or C glass is preferred. Biosoluble glasses are particularly preferred.

The glass fibers may be formed from filaments, that is to say fibers of infinite length or from staple fibers. Typically, and preferred, the length of the staple fibers is between 0.3 and 100 mm, more preferred between 3 to 18 mm.

Typically, and preferred, the diameter of the glass fibers is between 0.5 to 5.5µm, preferably from 1.5 to 3µm.

Suitable cellulose fibers are described, for example, in Fourné, Synthetic Fibers (1998), ISBN 3-446-16072-8, Chapter 2.13.3 on page 159 or Stoeckhert, Kunststoff Lexikon, 9th edition, Chapter "Cellulose-Fasern" on pages 79-80.

The single layer nonwoven filter material of the instant invention has an inner region having a first section (11) and a second section (12) in which the first section (11) and the second section (12) have different fiber densities and in which the second fiber density is higher than the first fiber density. Such different fiber densities cause different filtration characteristics. Preferably, the second fiber density is at least 30% higher, more preferred at least 50% higher, than the first fiber density. Preferably, the second fiber density is max. 200% higher than the first fiber density. Hence, the second fiber density is from at least 30% up to 200% higher than the first fiber density.

As the first section (11) faces the upstream section, it is of advantage if it has lower fiber density which causes a higher porosity and bigger pore size. Therefore, it has a high particle holding capacity. At the same time, the second section (12) has a higher fiber density which causes a smaller pore size. Consequently, the filter separation efficiency is high, especially with regard to small particle diameters. In other words, the second section (12) has a higher degree of separation with respect to small particles than the first section (11).

As the nonwoven filter material of the instant invention is a single layer nonwoven filter material, there is no distinct separation surface in the inner region (13) between the first section (11) and the second section (12). In contrast, the first section (11) merges along a fiber density gradient into the second section (12) of the inner region (13). As the fibers forming the inner area (13) consists of the same fibers in the first section (11) and the second section (12), such fiber density gradient also causes a porosity gradient. A porosity gradient in this context means that for example the pore size diminishes more or less continuously from the upstream side to the downstream side. In that context, continuously does not necessarily mean a strictly linear change, but more that there is no distinct point, which serves as a sharp boundary and/or point of distinction between the first section (11) and the second section (12). In other words, the first section (11) and the second section (12) of the inner region (13) are not separated by a distinct separation surface. I.e. there is no distinct surface of the first section (11) adjacent to a distinct surface of the second section (12) wherein the first and the second section would be connected to each other along this surface, e.g. by bonding or lamination of two separate layers.

The instant filter material provides for a low pressure drop, low energy consumption, long service life, as well as high-air-flow permeability and mechanical stability, i.e. high tensile strength, good stiffness and pleatability.

The fibers forming the inner area (13) and the first section (11) and the second section (12) are the same kind of fibers and thus the inner area (13) consists of a single fiber class. Fiber class shall mean fibers having the same diameter and/or fiber material composition. Fiber class shall also enclose fiber mixtures consisting of fibers with distinct diameter and/or fiber composition, but wherein the fiber diameter in a first section and in second section is the same.

Preferably, the composition and amount of fusible or reactive binder adhered to the fibers in the inner area (13) is homogeneously distributed throughout the inner area (13), binder composition and amount are in particular the same in the first section (11) and in the second section (12).

The single layer nonwoven filter material (10) is a non-woven which can be made up of various synthetic polymer fibers.

The non-woven can be a wet laid non-woven, a dry-laid non-woven or a spunbonded nonwoven or a melt-blown nonwoven. Such non-woven can be consolidated by means of chemical bonding as well as, if necessary, thermal and/or mechanical consolidation. The non-woven can be staple fiber non-woven or spunbonded nonwoven of filaments.

The preferred embodiments for the spunbonded nonwoven described below also apply for staple fiber non-woven.

Spunbonded nonwoven, also called spunbonds, are produced by a random deposition of freshly melt-spun filaments. The filaments are continuous synthetic fibers composed of melt-spinnable polymer materials.

Suitable polymer materials are, for example, thermoplastics, preferably polyamides, such as polyhexamethylene-diadipamide, polycaprolactam, aromatic or partially aromatic polyamides ("aramides"), aliphatic polyamides, such as nylon, partially aromatic or fully aromatic polyesters, aliphatic polyesters, polycarbonates (PC), polyphenylene sulphide (PPS), polyphenylene oxide (PPO), polystyrene (PS), polyvinyl carbazole (PVK), polyacetal (POM), polyaryl ether, polyaryl sulphone, polyether sulphone, polymers with ether and keto-groups, such as polyether ketones (PEK) and polyether etherketone (PEEK), polyolefins, such as polyethylene or polypropylene, or polybenzimidazoles. Particularly preferred are polyester, polyolefins, such as e.g. polyethylene or polypropylene, or aromatic or partially aromatic polyamides ("aramids"), aliphatic polyamides, such as e.g. nylon.

The spunbonded nonwoven preferably comprise or are composed of melt-spinnable polyesters. The polyester material can, in principle, be any known type suitable for fiber production. Such polyesters consist predominantly of components derived from aromatic dicarboxylic acids and from aliphatic diols. Commonly used aromatic dicarboxylic acid components are bivalent residues of benzenedicarboxylic acids, especially of terephthalic acid and of isophthalic acid; commonly used diols have 2 to 4 carbon atoms, wherein ethylene glycol is particularly suitable. Spunbonded fabrics which consist of at least 85 mole % of polyethylene terephthalate are particularly advantageous. The remaining 15 mol% are then formed by dicarboxylic acid moieties and glycol moieties which act as so-called modifiers and allow the person skilled in the art to specifically influence the physical and chemical properties of the produced filaments. Examples of such dicarboxylic acid units are residues of isophthalic acid or of aliphatic dicarboxylic acid, such as glutaric acid, adipic acid, and sebacic acid; examples of modifying diol residues are those composed of longer-chain diols, such as propane diol or butane diol, of diethylene or triethylene glycol or, if present in small quantities, of polyglycol with a molar weight of approximately 500 to 2000.

Beside the partially aromatic or fully aromatic polyesters, also aliphatic polyesters can be used. Such polymers are materials obtained from renewable resources and are so-called bio-based materials which, typically, are bio-degradable polymer materials. A well-known member of such aliphatic polyesters is poly-lactic acid (PLA) based thermoplastic resin or Polybutylensuccinat (PBS).

Polyesters containing at least 95 mol % of polyethylene terephthalate (PET) are particularly preferred, especially those composed of unmodified PET.

The polyesters contained in the spunbonded nonwoven preferably have a molecular weight corresponding to an intrinsic viscosity (IV) of 0.6 to 1.4, measured in a solution of 1 g polymer in 100 ml dichloroacetic acid at 25 °C.

In a further embodiment of the invention, the non-woven, particularly the spunbonded non-woven fabric, can also be a fusible binder-consolidated non-woven, i.e. the consolidation takes place by means of a thermoplastic binder which is preferably present in fiber form. The fusible binder-consolidated non-woven therefore comprises carrier and hot melt adhesive fibers. The carrier and hot-melt adhesive fibers can be derived from any thermoplastic, fiber-forming polymers, carrier fibers can furthermore also be derived from non-melting fiber-forming polymers. Such fusible binder-consolidated spunbonded fabrics are fundamentally described, for example, in EP-A 0,446,822 and EP-A 0,590,629.

Examples of polymers from which the carrier fibers can be derived are polyacrylonitrile, polyolefins, such as polyethylene or polypropylene, primarily aliphatic polyamides, such as nylon 6.6, primarily aromatic polyamides (aramids), such as poly-(p-phenylene terephthalate) or copolymers containing a content of aromatic m-diamine moieties to improve the solubility, or poly-(m-phenylene isophthalate), primarily aromatic polyesters, such as poly-(p-hydroxybenzoate), or preferably primarily aliphatic polyesters, such as polyethylene terephthalate.

The relative proportion of the two fiber types may be selected within wide limits, whilst making sure that the proportion of the hot melt adhesive fibers is sufficient to bond the carrier fibers to the hot melt adhesive fibers, thereby endowing the nonwoven fabric with a strength sufficient for the intended application, whilst on the other hand ensuring the necessary air permeability. The proportion of the hot-melt derived from the hot-melt fiber in the non-woven is usually less than 50% by weight (based upon the weight of the non-woven).

Modified polyesters having a melting point 10 to 50 °C, preferably 30 to 50 °C, lower than the raw material of the non-woven are particularly suitable as hot melt adhesive. Examples of such a hot melt adhesive are polybutylene terephthalate, or polyethylene terephthalate modified by the condensation of longer-chain diols and/or isophthalic acid or aliphatic dicarboxylic acid. Beside the above modified polyesters, also polyolefine, such as polyethylene and/or polypropylene, can be used as hot melt adhesive.

The hot melt adhesives are preferably incorporated into the non-woven in fibrous form.

The carrier fibers and hot melt adhesive fibers are preferably made up of one class of polymers. This implies that all of the fibers used are selected from one class of substances, so that these can readily be recycled after the non-woven has been used. If the carrier fibers consist of polyester, for example, the hot melt adhesive fibers selected will likewise be of polyester or a mixture of polyesters, for example in the form of bi-component fibers with PET in the core and a polyethylene terephthalate copolymer having a low melting point as sheath. In addition, however, bi-component fibers which are made up of different polymers are also possible. Examples of these are bi-component fibers of polyester and polyamide (core/sheath).

The monofilament titre of the carrier fibers and the hot melt adhesive fibers may be selected within said limits.

The filaments or staple fibers making up the non-woven may have a virtually circular cross section or may also have other shapes, such as dumb bell-shaped, reniform, triangular, trilobal or multilobal cross sections. Hollow fibers and bi-component or multi-component fibers may also be used. Furthermore, the hot-melt adhesive fiber may also be used in the form of bi-component or multi-component fibers.

Types of bi-component fiber shapes are core/sheath, core/sheath eccentric, side by side full, side by side hollow, side by side hollow eccentric, orange type with center or without center, striped, island in the sea, profile and mixed bi-component fibers.

Suitable and selected material combinations for manufacture such shaped types are RPET /PET, PET/CoPET, PET/PE, PP/PP, PP/PE, PET/PET, PET/PTT, R-PET/R-PET, PET/PA6, PET/PA6.6, PA&/CoPET, PP/PA6, PA6/PA6, PET/R-PET, PTT/PET, and PA6.6/PA6.6.RPET stands for recycled PET.

Preferably the ratio between the two bi-component materials is in the range of 30 wt.% to 90 wt.% of the higher melt point temperature component A and 10 wt.% to 70 wt.% of lower melt temperature component B. Typical ratios A to B can vary in the range of 30/70 wt.% to 80/20 wt.%, 30/70 wt.% to 70/30 wt.%, 50/50 wt.% to 70/30 wt.%, 65/35 wt.% to 80/20 wt.% and 30/70 wt.% to 90/10 wt%.

The fibers forming the non-woven may also be modified by means of the usual additives, for example by antistatic agents such as carbon black, or additives which will permit an electrostatic charge. Furthermore, the fibers can have antimicrobial equipment.

Typically, the weight per unit area of the single layer non-woven is between 20 and 500 g/m², preferably 40 and 400 g/m², particularly 90 and 250 g/m².

The single layer non-woven may contain binding fibers which allow for a thermal consolidation, e.g. by calendering or in a hot air oven in a manner known per se. The fibers can also have a bi-component structure (e.g. core/sheath), in which the sheath is the binder polymer.

The nonwoven may contain reactive binders, such as chemical binders, in case of wet-laid nonwoven. Also, if other fibers, such as glass fibers or cellulose fibers, are present in the nonwoven, reactive binders, such as chemical binders, can be present. Typically, such binders are present in amount of up to 25% by weight, preferably 5 to 25% by weight, based on the total weight of the nonwoven. Typically, such binders are Acrylate-based or styrene-based binders.

In a further embodiment flame-inhibiting modified binders can also be used, or binders can even be dispensed with altogether.

In a preferred embodiment, the single layer non-woven has been consolidated without mechanical means, such as needle punching, and are consolidated only by means of chemical binders or thermoplastic melt binder.

Typically, the individual titre of the fibers of single layer non-woven are from 10µm to 40 µm, preferably from 15 to 30µm.

The single layer non-woven according to the invention, preferably, has an air permeability of at least 750 l/m² sec measured in each case according to DIN EN ISO 9237.

The single layer non-woven according to the invention has an inner region (13) inbetween the first surface (20) and the second surface (30), said the inner region (13) having a first section (11) and a second section (12).

The thickness of the first section (11) in from 20-80% of the total thickness of the inner region and the thickness of the second section (12) in from 80-20% of the total thickness of the inner region. Preferably, the thickness of the first section (11) in from 30-70% of the total thickness of the inner region and the thickness of the second section (12) in from 70-30% of the total thickness of the inner region.

The first section (11) has a first fiber density, and the second filter section (12) has a second fiber density, said second fiber density is higher than the first fiber density. Preferably, the second fiber density is at least 30% higher, more preferred at least 50% higher, than the first fiber density. Preferably, the second fiber density is max. 200% higher than the first fiber density. Hence, the second fiber density is from at least 30% up to 200% higher than the first fiber density

Preferably, the first fiber density given in numerical value (number of fibers per mm²) is from 120 to 800 fibers per mm² and the second fiber density given in numerical value (number of fibers per mm²) is from 260 to 1600 fibers per mm².

The inner region (13) having the first section (11) with a first fiber density and the second section (12) with a second fiber density, said second fiber density being higher than the first fiber density is obtained by compressing the first surface (20) and second surface (30) of the nonwoven with a heated press or heated rollers having a temperature gradient which is applied between the first surface (20) and second surface (30).

The temperature gradient is applied during manufacturing, preferably while subjecting the nonwoven at the same time to pressure, e.g. while calendaring a nonwoven.

The temperature gradient applied between the first surface (20) and second surface (30) is at least 30°C, preferably between 30 and 80°C, more preferred between 30 and 60°C, most preferred between 40 and 50 °C. The temperature is measured on the surface of the surfaces which apply the heat to the first surface (20) and second surface (30).

The minimum temperature for applying the temperature gradient is 120°C, in particular for PET polymer fibers. For other fibers, in particular for fibers having a lower melting temperature than PET, such as PP/modified PP, the minimum temperature can be lowered to 100 °C or temperatures below such as 80 °C or 90 °C.

The maximum temperature for applying the temperature gradient is180°C, in particular for PET polymer fibers. For other polymer fibers, in particular for fibers having a lower melting temperature than PET, such as PP/modified PP, the maximum temperature can in a range between 140 °C to 160 °C.

The nonwoven fiber web is then calendered at a pressure of between 30 N/mm² to 60 n/mm². The line speed may vary between 5 m/min to 50 m/min. Preferably, the nonwoven fiber web is calendered at a pressure of between 30 N/mm² to 60 N/mm², preferably at a line speed of 16 m/min.

For a nonwoven filter material according to the invention it was found that lower pressures for PET/modified PET in the range of between 30 N/mm² to 40 N/mm² result into lower overall air permeability. The term modified PET means PET having a melting temperature being lower than PET homopolymer. Most typically, modified PET means isophthalic acid modified PET. In experiments the total air permeability decreased from about 1400 l/m²s (without temperature gradient - both calendar rolls at 135 °C) to about 1100 l/m²s (calendar rolls at 140 °C and 180 °C). The decreased in total air permeability by 300 l/m²s reflects the creation of a fiber density gradient within the material. A single layer nonwoven filter material according to the invention wherein a second fiber density in a second "sub" layer is at least 30% higher, more preferred at least 50% higher, than the first fiber density in a first "sub" layer shows a decrease in total air permeability of between 100 l/m²s to 600 l/m²s compared to a otherwise same single layer nonwoven filter material without a fiber density gradient.

By applying the temperature gradient, the second section (12) having the higher fiber density is formed on the side by the surface (press or roller) having the higher surface temperature.

The temperature gradient is applied to the surface of the nonwoven already pre-consolidated by thermal pre-consolidation or, if present, by chemical binder. Such pre-consolidation is typically achieved by a roller pre-consolidating the fresh formed nonwoven, while such fresh formed nonwoven is still on the conveyor belt on which the nonwoven is formed.

Pre consolidation, meaning a first consolidation in advance of applying a temperature gradient while applying pressure onto the filament web is typically part of the manufacturing process.

Herein, freshly laid polymer filaments, in particular PET / modified PET filaments are mechanically and thermally pre-consolidated by a roll slightly compressing the pre - nonwoven filament web. For PET/modified PET filaments the roll temperature is preferably in a range of between 75 °C to 85°C. Additional thermal pre consolidation is achieved by blowing hot air onto the laid filaments at a temperature of between 120 °C to 150 °C.

By the compression, when applying the temperature gradient, of the first surface (20) and second surface (30) of the nonwoven, the first section (11) and second section (12) are formed in the inner region (13) having different fiber densities. By such different fiber densities also a porosity gradient results in the inner region (13) forming a first section (11) and second section (12) having different porosities. As mentioned, the second section (12) of the inner region (13) is formed at the surface (30) which is facing the surface (press or roller) having the higher surface temperature.

In a further embodiment of the invention by the aforementioned compression, an embossed pattern statistically distributed or small, repeat embossings, preferably stippling, can be applied in which the compressed area, that is to say the totality of all thin, compacted points on the spunbonded nonwoven makes up 5 to 30 %, preferably 8 to 20 % of its total area. In the case of fusible binder-consolidated spunbonded nonwoven this embossed pattern can advantageously be applied by calander consolidation. If the non-woven is consolidated by a chemical binder, the embossed pattern can likewise be applied by means of a calander. This embossed pattern, which can be applied to both sides of the spunbonded nonwoven but preferably to only one surface of the spin-bonded nonwoven can be obtained by running the spunbonded nonwoven through a heated calander, has a plurality of small embossings, 0.2 to 4 mm², preferably 0.5 to 2 mm² in size, which are separated from one another by intervening, unstamped surface elements of the fabric of approximately the same size. The area of the compressed parts of the non-woven and the uncompressed parts of the non-woven can be determined by means of photomicrographic cross sections, for example.

### Manufacturing Process

The single layer non-woven according to the invention is manufactured in a single manufacturing process. The manufacturing process of forming the single layer nonwoven does, preferably, not involve a process step of applying or dispersing a second layer of fibers with distinct fiber diameter and/or fiber material composition. The manufacturing process of the single layer non-woven is preferably also not involving a process step of bonding separate layers or sections. In a single manufacturing process (in-line process), the single layer nonwoven is formed, pre-consolidated and subjected to the temperature gradient as described. It is also possible to produce a nonwoven being pre-consolidated in a first step and thereafter to subject the temperature gradient to such nonwoven by applying the temperature gradient as described.

The nonwoven filter material of the instant invention is a single layer nonwoven filter material. As used herein the term "single layer" refers to a nonwoven filter material manufactured in a single manufacturing step without manufacturing separate filter material layers and combining, attaching, adhering or compounding these in a subsequent or additional manufacturing step.

The term "single layer" nonwoven shall limit the literal understanding to a nonwoven filter material layer composed of or consisting of one type of polymeric fibers or one homogeneous blend of two or more different fibers, said blend includes polymeric fibers, in particular melt-spun polymer fibers, throughout the thickness of the nonwoven layer.

Further, and preferred, the term "single layer" includes that the fibers forming the inner area (13) and the first section (11) and the second section (12) are the same kind of fibers and thus the inner area (13) consists of a single fiber class. In this context, single fiber class shall mean (i) fibers having the same physical dimension and the same chemical composition or (ii) blends of two or more fibers of (i).

By the compression of the first surface (20) and second surface (30) of the nonwoven, the first section (11) and second section (12) are formed in the inner region (13) having different fiber densities. By such different fiber densities also a porosity gradient results in the inner region (13) forming a first section (11) and second section (12) having different porosities and resulting in different filtration characteristics while consisting of the same material.

Parameters for determining the filtration characteristics of the single layer nonwoven filter material of the instant invention, can be the pore size and porosity. Further parameters can be fiber diameter, fiber density and the filter layer thickness. For example, the filtration efficiency of the second (12) section is significantly higher than the filtration efficiency of the first section (11). E.g. the filtration efficiency of the second section (12) is at least twice as high as the filtration efficiency of the first section (11). In addition, and preferably the dust holding capacity of the first section (11) is at least twice as high as the dust holding capacity of the second section (12).

The single layer non-woven according to the invention can be a wet laid non-woven, a dry-laid non-woven, a spunbonded nonwoven or a melt-blown nonwoven.

When producing the melt-spun fibers, raw polymer material can be mixed with stabilizers, additives, coloration agents, resin modifiers, or other additives before spinning.

In a preferred embodiment, the nonwoven comprises polyethyleneterephtalate bicomponent filaments, the filaments having a first part and a second adjacent part, in particular a core part and a sheath part, wherein the core part of the filament is made from higher melting PET, whereas the lower melting sheath part of the filament is made from modified PET or from PBT. The term modified PET means PET having a melting temperature being lower than PET homopolymer (higher melting PET). Most typically, modified PET means isophthalic acid modified PET.

In a preferred embodiment, the fibers or filaments of the nonwoven can be hollow fibers or have tri-lobal, multi-lobal, and/or rectangular shapes.

In a preferred embodiment, the nonwoven consists of PET-filaments bonded by using polybutylene terephthalate binder filaments or isophthalic acid modified PET, preferably such filaments are bi-component filaments with PET core and isophthalic acid modified PET or PBT sheath.

The particular advantage offered by the instant single layer non-woven is a filter material in which both filter sections (11) and (12) can be manufactured at the same time and that no step is required to join any filter sections. At the same time, the filter sections (11) and (12) are also seamlessly joined together in this way, so that intermediate layers that are prone to defects can be avoided, especially during pleating of the filter. The application of the temperature gradient causes the formation of different fiber densities and thereby pores of different sizes in the filter sections.

The fiber densities and the resulting pore size follows the course of the temperature gradient. Accordingly, a porosity gradient is formed also. It is of further advantage, if the filter material is manufactured without the application of a second layer of fibers with distinct fiber diameter and/or fiber material composition and without bonding of separate layers or sections.

In a particularly preferred embodiment, the instant single layer non-woven is a filter material for an oil filter, said oil filter is usable for separating oil drops from an oil mist.

In a further aspect of the instant invention, a method for manufacturing the single layer non-woven filter material is provided, comprising the steps:
(i) providing a filament or staple fiber;
(ii) forming a nonwoven out of the filament or staple fiber provided in step i) having a first surface (20) and a second surface (30) being opposite to the first surface (20);
(iii) optionally pre-consolidating the nonwoven of step (ii) by chemical or thermo-bonding,
(iv) applying a temperature gradient to the nonwoven of step (ii) or (iii),
(v) said temperature gradient being applied in step (iv) is applied between the first surface (20) and second surface (30) is at least 30°C, preferably between 30 and 80°C, more preferred between 30 and 60°C, most preferred between 40 and 50°C, said temperature is measured on the surface of the surfaces which apply the heat to the first surface (20) and second surface (30).

The first step, i.e. the step of providing a filament or staple fiber, occurs preferably by the help of an extruder. A polymer feed provides the polymer raw material to the extruder. The polymer feed can be a part of the extruder. Within the extruder, the raw material becomes molten. Further, if the desired polymer fiber or filament results from a mixed material, e.g. either mixed polymer raw materials or polymer raw materials mixed with other additives, such mixing is also performed in the extruder. It is of advantage if the extruder also comprises a metering pump and a device for spinning the filament, e.g. a spinneret.

Further, the first step of providing a polymer filament or staple fiber, can comprise one or more of the following substeps
i.1 providing a polymer raw material
i.2 mixing of the raw material and/or adding further additives
i.3 melting of the raw material or the mixture of raw material and additives
i.4 extruding the polymer material and/or filament spinning.

For example, the mixing and melting of the raw material can be performed by the help of a heated screw drive. The screw drive can serve as a device for feeding the polymer to the extruder, particularly to the spinneret. After leaving the spinneret, the polymeric filament can be stretched. The stretching can occur via air attenuation, e.g. high velocity air attenuation.

For forming a nonwoven out of these fibers and/or filaments according to step ii), they have to be arranged randomly to a web. Then, most typically, the fibers and/or filaments have to be pre-consolidated, typically by chemical or thermo-bonding,

In a first variant for web formation, particularly for forming a web for a spunbond nonwoven, the filaments are deposited onto a moving belt. For that purpose, a vacuum can be applied under said moving belt. The fibers can be laid down to form a random web in a conventional manner. For that purpose, the single filaments simply are laid down as they come from the spinneret or stretching procedure onto the moving belt.

Alternatively, e.g. if a melt-blown nonwoven shall be manufactured, the filaments can be laid down as fiber stacks. Such fiber stacks consist of stapled fibers. The fibers or filaments are, preferably, cut to a length of between 5 mm and 500 mm during the process. The fibers of the formed web can have any size in that range, and it is not required but possible that all the fibers of a web do have the same length.

In a following step the fibers can be pre-consolidated, e.g. by a roller, to build a pre-consolidated fiber web. The pre-consolidation can also be done by a heated drum or heated roll or a thermal lance.

After transforming the web into a nonwoven fabric by the aforementioned pre-consolidation, the temperature gradient is applied to the nonwoven according to step iv) by a compressing the first surface (20) and second surface (30) of the nonwoven with a heated press or heated rollers having a temperature gradient which is applied between the first surface (20) and second surface (30). Preferably, temperature gradient is applied by calendaring the nonwoven, most preferred using a pair of rollers.

The temperature gradient applied between the first surface (20) and second surface (30) is at least 30°C, preferably between 30 and 80°C, more preferred between 30 and 60°C, most preferred between 40 and 50°C, said temperature is measured on the surface of the surfaces which apply the heat to the first surface (20) and second surface (30).

This leads to the formation of the first section (11) and second section (12) in the inner region (13) of the single layer nonwoven having different fiber densities. Such different fiber densities also cause a porosity gradient between the first section (11) and the second section (12). By applying the temperature gradient, the second section (12) having the higher fiber density is formed on the surface by the surface (press or roller) having the higher surface temperature.

Typically, the temperature gradient is applied so that it extends from the upstream side of the nonwoven to the downstream side of the nonwoven. Preferably, the calendar has at least two rolls. During calendaring, the first roll is in contact with the first surface, typically the upstream side, of the nonwoven and the second roll is in contact with the second surface, typically the downstream side, of the nonwoven. For application of the temperature gradient the calendar rolls are heated to different temperatures. In other words, the temperature gradient extends from the first calendar roll to the second calendar roll. The first calendar roll and the second calendar roll do have different temperatures. If the calendaring device does contain only one calendar roll and on the opposite site just a plate or moving belt or the like, the temperature gradient extends from that one roll to the plate, moving belt or the like.

After applying the temperature gradient the nonwoven is further consolidated in a heated oven at elevated temperatures causing the lower melting component of the nonwoven, typically the sheath polymer of a bicomponent staple fiber, to melt or ar least to become sticky. Most typically, the sheath material is melted and consequently acts as a thermo-bonding binder. In a further step, the nonwoven can thickness calibrated by known means.

In some embodiment, a chemical binder system can be used in combination with a thermo-bonding binder, e.g. in case of wet-laid nonwoven.

The thermo-bonding binder comprise a fusible binder. Preferably, the fusible binder is applied to the nonwoven during manufacture of the nonwoven, e.g. as described in EP-A-0,446,822 and EP-A-0,590,629 or by using bi-component fibers having a lower melting sheath material. Such thermo-bonding binder are also called hot melt adhesive fibers. In the context of the present hot melt adhesive fibers, such polymer fibers having a melting point of 10°C to 100 C, preferably 20°C to 50°C lower than the higher melting raw material, which is used as a base for the polymer filaments of the nonwoven. The hot melt adhesive fibers can be derived from any thermoplastic, filament-forming polymer. For example, the hot melt adhesive fibers can consist of polypropylene, polybutylene terephthalate, or polyethylene terephthalate modified by the condensation of long-chain diols and/or isophthalic acid or aliphatic dicarboxylic acid.

Taken together, it is of advantage, if step ii) comprises at least one of the following:
ii.1 application of a fusible binder;
ii.2 bonding the randomly arranged fibers and/or filaments of the web and thereby turning the fiber and/or filament web into a nonwoven.

Thus, after applying the temperature gradient in step (iv), the nonwoven is finally consolidated in a heated oven, preferably an hot air oven, at elevated temperatures. Such elevated temperatures are between 230°C and 245°C for a PET/modified PET filament. For a PP/modified PP filament such elevated temperatures are preferably in between 200 °C and 210°C. In general terms, depending on the polymer material such elevated temperatures are set to between 200°C and 250°C, with in any temperature in between such as 210°C, 220°C, 230°C and 240°C. The final thermal consolidation is performed at a higher temperature than in step (iv).

The final consolidation causing the lower melting component of the nonwoven, typically the sheath polymer of a bicomponent staple fiber, to melt or at least to become sticky. Most typically, the sheath material is melted and consequently acts as a thermo-bonding binder. In a further step, the nonwoven can thickness calibrated by known means.

As described, the final thermal consolidation is performed by putting the calendared nonwoven in a heat oven preferably an hot air oven. The residence time within such heat oven/hot air oven is typically 10 sec to 60 sec. The residence time is related to the area weight of filter material, wherein 10 s are used for filter materials having an area weight of up to 50g/m², 10 s to 20 s for filter materials having an area weight of between 50 g/m² to 100 g/m2, 20 s to 30 s for filter materials having an area weight of between 100 g/m² to 150 g/m2, 30 s to 50 s for filter materials having an area weight of between 150 g/m2 to 250 g/m2 and 50s to 60 s for filter materials having an area weight of 250 g/m2 and above.to allow for the final thermo-bonding. During such final thermal consolidation in the heat oven/hot air oven, the nonwoven expands, and the thickness increases of the fabric increases, typically by at least 30%, compared to nonwoven introduced into the oven. In order to allow for such expansion, no external force, e.g. pressure, is applied during the final thermal consolidation.

In other words: by applying the temperature gradient with the help of the calendar a nonwoven is achieved which comprises a first filter section having a higher porosity than an also comprised second filter section, wherein the first filter section merges into the second filter section without a distinct interface and without a distinct separation step in the filter material porosity between the two filter sections. This nonwoven, for final thermal consolidation, is forwarded into a heat oven and backed for final thermal consolidation. The final product is the filter material described above.

Further features, details and advantages of the invention are apparent from the wording of the claims and from the following description of embodiments based on the drawings. Showing:
- Fig. 1: schematic drawing of a cross section of a filter material
- Fig. 2: (a) cross section through a filter material according to example 1 which is manufactured without application of a temperature gradient;
(b) cross section through a filter material according to example 2, which is manufactured with application of a temperature gradient.

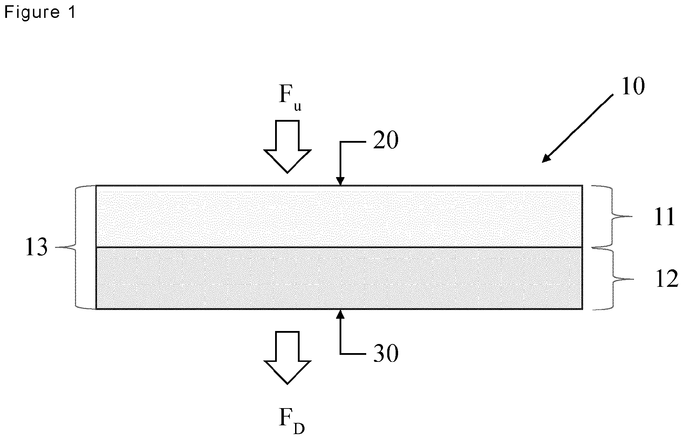

Fig. 1 shows a schematic cross-section through a filter material (10). The filter material 10 has a first surface (20), typically the upstream side, and a second surface (30), typically the downstream side of the filter.

The first surface (20) faces towards and arriving fluid stream Fu. The second surface (30) faces in the direction of the fluid stream F_{D} leaving the filter material 10. The filter material (10) has a first section (11) and a second section (12) forming the inner region (13). The first section (11) has a lower fiber density as the second section (12), thereby causing a higher porosity of the first section (11) than the second section (12).

The fiber density gradient of the first section (11) merges seamlessly into the second section (12) along a gradient G. It is not required that the fiber density changes in a linear manner along the gradient G.

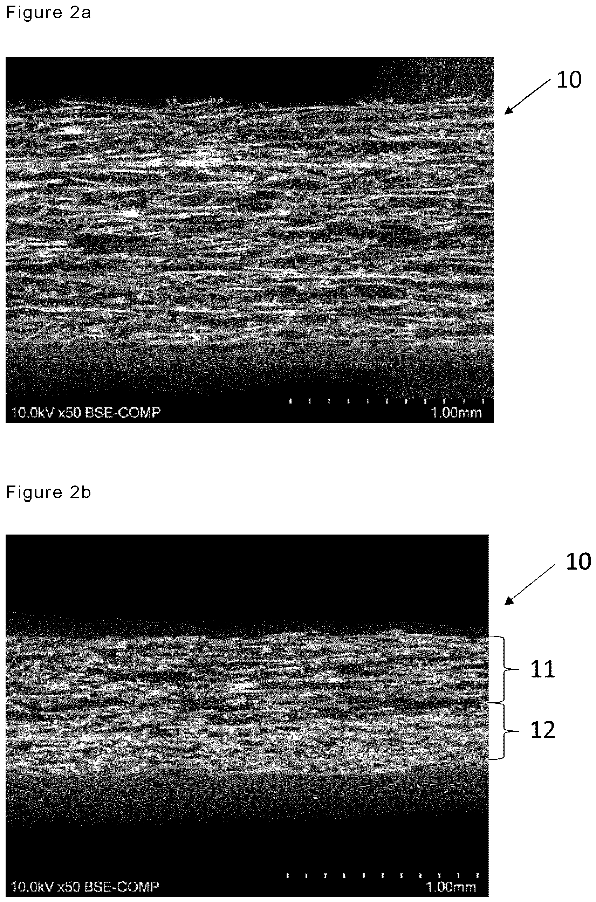

Fig. 2 a shows a filter material according to Example 1

Fig. 2 b shows a filter material according to Example 2

### General measurement methods:

To such extent not already specified, the following methods are applied:

### Fiber density:

Fiber density is determined by the microscopic method as follows:
The individual fiber density of the first section (11) and the second section (12) of the filter material (10) was determined based on cross-sectional cuts of the filter material. The number of fibers (identifiable by their cut cross section) was determined in an area of 2500 µm (horizontal length) to 400 µm, respectively 290 µm (vertical length) (sectional crosscut width in Fig. 2(b)). The vertical scale is adapted to the thickness. The vertical length is in the measurement adjusted to exclude the interface region between the first section (11) and the second section (12).

[For illustration purposes only, the fibers shown in Figure 2 have a diameter of 15 µm.]

To determine the fiber density for each of the first section (11) and the second section (12), the number of cut fibers was counted (highlighted cross sections in Fig.) and related to the selected cross-sectional area.

| | |
|---|---|
| Air permeability: | The air permeability is determined according to DIN EN ISO 9237. |
| Area weight: | The weight per unit area [area weight] is determined according to DIN EN 12127 / DIN EN ISO 29073-1 |
| Thickness: | The thickness is determined according to DIN EN ISO 9073-2 |
| Tensile strength: | The tensile strength (mechanical strength) is determined according to DIN EN 29 073-3 |
| Fiber diameter: | The fiber diameter is determined in accordance with DIN EN ISO 1973 (As of: 1995). |

### Examples:

*Example 1:* In a first example, as shown in Fig. 2(a) a bicomponent fiber PET / modified PET (PET/CoPET - low melt) core-sheath bicomponent base spunbond fiber was collected on a belt transportation mechanism. The fiber consists of 50 wt % of PET core component A and 50 wt% of CoPET low melt component B. The nonwoven as to example 1 was subjected to calendering, wherein the calendering was done with equal roll temperatures of 135 Celsius at the upper calender roll PW and at the lower calender roll NW. A final thermal consolidation was done at 237°C.

| | | |
|---|---|---|
| *PET*/*Modified PET fiber diameter:* | *15* | *micron* |
| *Area weight:* | *150* | *g*/*m²* |
| *Spunbond mat thickness:* | *1.25* | *mm* |
| *Tensile Strength* - *MD:* | *46* | *daN*/*5cm* |
| *Tensile Strength* - *CD:* | *37* | *daN*/*5cm* |

**Table 1: Porosity of example 1 filter material**

| | | |
|---|---|---|
| *Fiber cross section "marked fiber outer circle"* | *area [µm²]* | *3125000* |
| *Number "circled cross-cut fibers"* | *[n]* | 859 |
| *fiber diameter* | *[µm]* | 15 |
| *Free surface area between* cross-sectional cut fiber *"2D-Porosity"* | *[%]* | *95.1* |
| *surface area of* cross-sectional cut fiber *(fiber density)* | *[%]* | 4.9 |
| *numerical fiber density of* cross-sectional cut | *[number* o*f* cross-sectional cut fiber per mm²] | *xxx* |
| *Filter layer thickness* | *[µm]* | *1250* |
| *Cross sectional filter layer width* | *[µm]* | *2500* |

The achieved filter material had the following characteristics:
*For the purpose of the discussion, the term "2D-Porosity" means the free surface area between the* cross-sectional cut fiber of a sample of the single layer nonwoven having the dimension 1250 µm (thickness) and 2500 µm (width).

The 2D porosity of the filter material (10) according to example 1 was thus determined based on cross-sectional cuts of the filter media. The number of fibers (identifiable by their cut cross section) was determined in an area of 1250 µm (layer thickness) to 2500 µm (sectional cross cut width in Fig. 2(a)). The fibers have a diameter of 15 µm. To calculate the 2D-Porosity, the number of cut fibers (highlighted cross sections in Fig.1) in total was determined and multiplied by the fiber diameter. Such result was divided by the total square area of the cut section in Fig. 2(a). According to the determination the filter material as to example 1 exhibits a 2D-Porosity of 95.1 %. The calculated fiber density is therefore 4.9 %.

*Example 2:* As to a second example as shown in Fig. 2 (b) of the invention the same fibers were manufactured with the same process steps, same materials and same process parameters except for heat calendaring with the upper calender roll PW at a temperature of 180 Celsius, while the temperature at the lower calender roll NW was held at 140 Celsius. A final thermal consolidation was again performed at *237*°*C*

| | | |
|---|---|---|
| *PET* /*Modified PET fiber diameter:* | *15* | *micrometers* |
| *Area weight:* | *150* | *g*/*m²* |
| *Spunbond mat thickness:* | *0.69* | mm |
| *Calender Roll (PW) Temperature* | *180* | *Celsius* |
| *Calender Roll (NW) Temperature* | *140* | *Celsius* |
| *Tensile Strength* - *MD:* | *50* | *daN*/*5cm* |
| *Tensile Strength* - *CD:* | *41* | *daN*/*5cm* |

The achieved filter material (10) had the following characteristics:
*For the purpose of the discussion, the term "2D-Porosity" means the free surface area between the* cross-sectional cut fiber of a sample of the single layer nonwoven having the dimension 1250 µm (thickness) and 2500 µm (width).

The 2D-Porosity of the filter material (10) according to example 2 was determined based on a cross-sectional cut of the filter media layer. The number of fibers (identifiable by their cut cross section) was determined in an area of 690 µm (overall layer thickness according to Fig. 2(b)) to 2500 µm (sectional cross-cut width in Fig. 2(b)).

It can be seen from Fig. 2(b) that the filter material (10) has a first section (11) and a second section (12). The second section (12) has a higher fiber density than the first section (11) causing the first section (11) having a higher 2D-Porosity than the second section (12). As can be further seen in Fig. 2(b), an upper part, corresponding to the first section (11) of the filter material (10) experienced a higher expansion compared to the lower part during final thermal treatment.

The fibers again have the same diameter of 15 µm. The number of cut fibers was determined in the first section (11) and the second section (12) of the filter material individually and multiplied by the average fiber diameter. The following tables show the results:
The first section (11) of the filter material (10) was determined to have a thickness of 400 µm. The number of fibers in the upper part of the filtration layer counted to be 385, resulting in a calculated 2D-Pporosity of 93.2 % and a calculated fiber density of 6.8 % for the first section (11) of the filter material (10).

**Table 2: 2D-Porosity of example 2 first section (1 1)of the filter material**

| | | |
|---|---|---|
| *Fiber cross section "marked fiber outer circle"* | *area [µm²]* | *1000000* |
| *Number "circled cross-cut fibers"* | *[n]* | 385 |
| *fiber diameter* | *[µm]* | 15 |
| *Free surface area between* cross-sectional cut fiber *"2D-Porosity"y* | *[%]* | 93.2 |
| *surface area* of cross-sectional cut fiber *(fiber density)* | *[%]* | 6.8 |
| *numerical fiber density of* cross-sectional cut | *number of* cross-sectional cut fiber per mm²] | *xxx* |
| *Sub layer (NW) thickness* | *[µm]* | *400* |
| *Cross sectional layer (NW) width* | *[µm]* | *2500* |

The second section (12) of the filter material (10) was determined to have a thickness of 290 µm.

The number of fibers in the second section (12) of the filter material (10) counted to be 539, resulting in a calculated 2D-Porosity of 86.9 % and a calculated fiber density of 13.1 % for the second section (12).

**Table 3: 2D-Porosity of example 2 second section (12) of the filter material**

| | | |
|---|---|---|
| *Fiber cross section "marked fiber outer circle"* | *area [µm²]* | *725000* |
| *Number "circled cross-cut fibers"* | *[n]* | 539 |
| *fiber diameter* | *[µm]* | 15 |
| *Free surface area between* cross-sectional cut fiber *"2D-Porosity"y* | *[%]* | 86.9 |
| *surface area* of cross-sectional cut fiber *(fiber density)* | *[%]* | *13.1* |
| *numerical fiber density of* cross-sectional cut | *number of* cross-sectional cut fiber per mm²] | *xxx* |
| *Sub layer (PW) thickness* | *[µm]* | *290* |
| *Cross sectional layer (PW) width* | *[µm]* | *2500* |

The second section (12) of the filtration material (10) has an almost two times higher density, thus 2D-Porosity is lowered by 6.3 % compared to the first section (11).

### Filtration characteristics

The filtration characteristics for the filtration of liquids were compared for the media according to Example 1 and Example 2.

The following conditions have been applied to measure the filtration efficiency and the retention capacity of the test filter:

| | |
|---|---|
| Procedure | ISO 4548-12 specified according to MIL-H- |
| Test fluid | 5606 |
| Flow rate | 114 L/h |
| Temperature | 40°C specified according to ISO |
| Test dust | 12103-1 A3 (ISO MTD) |
| Concentration | 10 mg/L |

**Table 4: Liquid filtration characteristics of the filter media according to example 1 and example 2**

| | ΔP increase (hPa) | Retention capacity (g) at final ΔP | Filtration efficiency Particle Size >10µm [%] | Filtration efficiency Particle Size >20µm [%] |
|---|---|---|---|---|
| Example 1 PW upstream | 560 | 3,08 | 0 | 15,1 |
| Example 1 NW upstream | 589 | 3,5 | 0 | 20 |
| Example 2 PW upstream Second filter section 12 upstream | 586 | 0,82 | 17 | 33,5 |
| Example 2 NW upstream First filter section 11 upstream | 598 | 2,22 | 16,5 | 45,2 |

The filtration characteristics were measured with liquid flow from both sides of the filtration media. Thus, each filter media (10) was measured with the PW side in upstream direction and downstream direction, NW side vice versa.

PW and NW indicate the side of the filtration layer media having been calendered by calendar roll PW or NW as detailed above. In Example 1 the calendar roll temperatures were both 135 °C at each calender rolls (PW; NW) as described in example 1
In the test the pressure drop increase was measured and the test being performed up to the ISO 4548-12 defined completion criteria (ΔP increase (hPa)).

As can be seen in table 4 the retention capacity is similar for liquid flow for PW upstream and PW downstream (NW vice versa). With PW positioned in upstream direction the retention capacity is at 3,08 g at final ΔP increase. With PW positioned in downstream direction the retention capacity is at 3,5 g at final ΔP increase. The filtration efficiency for a particle size >10µm is zero for both upstream and downstream position.

With PW positioned in upstream direction the filtration efficiency for a particle size >20µm is 15.1 %. With PW positioned in downstream direction the filtration efficiency for a particle size >20µm is 20 %.

The filtration media as to example 1 is not effective in the 10 micrometers particles test, thus particles with up to 10 micrometers size will not be filtered.

Table 4 shows that the retention capacity is significantly distinct for liquid flow with PW upstream (second section 12) and NW upstream (first section 11). With PW positioned in upstream direction the retention capacity is at 0.82 g at final ΔP increase. This is significantly lower compared to PW (second filtration section 12) positioned in downstream direction. Here the retention capacity is at 2.22 g at final ΔP increase. The overall retention capacity of the filtration material (10) as to example 2 is lower compared to the filtration material 10 as to example 1.

With PW positioned in first surface (upstream) direction the filtration efficiency for a particle size >10µm is 17 %. With NW positioned in first surface (upstream) direction the filtration efficiency for a particle size >10µm is 16.5 %. Here only the lower porosity part PW of the filtration material (10) performs filtration. The very similar efficiency performance for both upstream and downstream positioning of the PW side or second filter section 12 orientation underline this observation.

With PW (second section 12) positioned in upstream direction the filtration efficiency for a particle size >20µm is 33.5 %. With NW (first section 11) positioned in upstream direction the filtration efficiency for a particle size >20µm is 45.2 %. For a particle size >20µm the NW layer starts to capture those particles.

In a preferred configuration the PW layer or second section (12) of filter material (10) is positioned downstream (higher fiber density and lower porosity downstream the liquid flow direction). This ensures a good retention capacity while also providing medium to high filtration efficiency for particles with a particle size >10µm, respectively >20µm.

The invention is not limited to any of the above-described embodiments but can be modified in a variety of ways.

In a variant, thermal bonding can also occur by the help of heated calendar rolls. For example, the bonding can comprise a first step of thermal bonding by heated calendar rolls and a second step of heat setting in an oven. In that variant, the bonding of step b) and calendaring of step c) are performed together in one single step. Alternatively, the nonwoven can be calendared two times: In a first calendaring step the web structure is bonded according to step b) to a nonwoven, in a subsequent calendaring step, the nonwoven is treated by a thermal gradient according to step c).

In any event, a filter material (10), namely a single layer nonwoven material, is preferred, comprising a first section (11) and a second section (12), the first section (10) facing the upstream side (20) of the filter material (10) and the second section (12) facing the downstream side (30), wherein the first section (11) is of higher porosity than the second section (12), and wherein the first and the second sections (11), (12) merge into each other along a porosity gradient G, so that no defined separation surface exists between the sections. It is further preferred, if the nonwoven is a spunbond nonwoven or a melt-blown nonwoven. It is a particular advantage, if the first section (11) and the second section (12) do have different filtration characteristics but do consist of the same material, having the same chemical composition and fiber diameter. In any event, the nonwoven filter material can consist of melt-spun polymer. For example, the first and second section (11), (12) can be made from a polymer which is selected from polyethyleneterephtalate, polypropylene, polyethylene, polyamide, polyurethane, or the like. Also, the nonwoven material can consist of polyethyleneterephtalate bicomponent filaments, having a core part and an outer part, wherein the core part of the filament is made from higher melting PET, whereas the lower melting outer part of the filament is made from modified PET.

In any event, the filter material 10 may be an oil filter.

All of the features and advantages, including constructional details, spatial arrangements, and process steps, arising from the claims, the description, and the drawing may be essential to the invention both individually and in a wide variety of combinations.

## Claims

1. A single layer nonwoven filter material (10) having:
(i) a first surface (20) and a second surface (30) and an inner region (13) inbetween the first surface and the second surface,
wherein
(ii) the inner region (13) having a first section (11) and a second section (12),
(iii) the first section (11) facing the first surface (20) of the filter material (10),
(iv) the second section (12) facing the second surface (30) of the filter material (10),
(v) the first section (11) has a first fiber density and the second filter section (12) has a second fiber density,
(vi) the second fiber density is higher than the first fiber density,
(vii) the fibers forming the inner area (13) and the first section (11) and the second section (12) are the same kind of fibers,
(viii) the thickness of the first section (11) in from 20-80% of the total thickness of the inner region
(ix) the thickness of the second section (12) in from 80-20% of the total thickness of the inner region
(x) the second fiber density is higher, than the first fiber density.

2. The single layer nonwoven filter material as claimed in claim 1, wherein the second fiber density is at least 30% higher, more preferred at least 50% higher, than the first fiber density.

3. The single layer nonwoven filter material as claimed in claim 1 or 2, wherein the second fiber density is max. 200% higher than the first fiber density.

4. The single layer nonwoven filter material as claimed in one or more of claims 1 to 3, wherein the nonwoven is a staple fiber nonwoven of filament fiber nonwoven, preferably a spunbond nonwoven or melt-blown nonwoven.

5. The single layer nonwoven filter material as claimed in one or more of claims 1 to 4, wherein the nonwoven is a single layer nonwoven consists of one type of polymeric fibers or one homogeneous blend of two or more different fibers, said blend includes polymeric fibers, in particular melt-spun polymer fibers, throughout the thickness of the nonwoven layer.

6. The single layer nonwoven filter material as claimed in one or more of claims 1 to 5, wherein the fibers forming the inner area (13) and the first section (11) and the second section (12) are the same kind of fibers and the inner area (13) consists of a single fiber class.

7. The single layer nonwoven filter material as claimed in one or more of claims 1 to 6, wherein the nonwoven is selected from the polymer materials polyamides, aromatic or partially aromatic polyamides ("aramides"), aliphatic polyamides, partially aromatic or fully aromatic polyesters, aliphatic polyesters, polycarbonates (PC), polyphenylene sulphide (PPS), polyphenylene oxide (PPO), polystyrene (PS), polyvinyl carbazole (PVK), polyacetal (POM), polyaryl ether, polyaryl sulphone, polyether sulphone, polymers with ether and keto-groups, polyolefins, or polybenzimidazoles, preferred polymer materials are polyesters, especially polyethylene terephthalate (PET).

8. The single layer nonwoven filter material as claimed in one or more of claims 1 to 7, wherein the nonwoven is a fusible binder-consolidated non-woven.

9. The single layer nonwoven filter material as claimed in one or more of claims 1 to 7, wherein the nonwoven is a fusible binder-consolidated non-woven and the fusible binder is provided by bi-component fibers, preferred bi-component fiber shapes are core/sheath, core/sheath eccentric, side by side full, side by side hollow, side by side hollow eccentric, orange type with center or without center, striped, island in the sea, profile and mixed bi-component fibers.

10. The single layer nonwoven filter material as claimed in claim 9, wherein the bicomponent fibers are RPET /PET, PET/CoPET, PET/PE, PP/PP, PP/PE, PET/PET, PET/PTT, R-PET/R-PET, PET/PA6, PET/PA6.6, PA&/CoPET, PP/PA6, PA6/PA6, PET/R-PET, PTT/PET, and PA6.6/PA6.6.

11. The single layer nonwoven filter material as claimed in claim 9, wherein the ratio between the two bi-component materials of the bi-component fiber is in the range of 30 wt.% to 90 wt.% of the higher melt point temperature component A and 10 wt.% to 70 wt.% of lower melt temperature component B.

12. The single layer nonwoven filter material as claimed in one or more of claims 1 to 11, wherein the weight per unit area of the single layer non-woven is between 20 and 500 g/m², preferably 40 and 400 g/m², particularly 90 and 250 g/m².

13. The single layer nonwoven filter material as claimed in one or more of claims 1 to 12, wherein the first fiber density given in numerical value (number of fibers per mm²) is from 120 to 800 fibers per mm² and the second fiber density given in numerical value (number of fibers per mm²) is from 260 to 1500 fibers per mm²

14. A method for manufacturing the single layer non-woven filter material as defined in claim 1 comprising the steps:
(i) providing a filament or staple fiber;
(ii) forming a nonwoven out of the filament or staple fiber provided in step i) having a first surface (20) and a second surface (30) being opposite to the first surface (20);
(iii) optionally pre-consolidating the nonwoven of step (ii) by chemical or thermo-bonding,
(iv) applying a temperature gradient to the nonwoven of step (ii) or (iii),
(v) said temperature gradient being applied in step (iv) is applied between the first surface (20) and second surface (30) is at least 30°C, preferably between 30 and 80°C, more preferred between 30 and 60°C, most preferred between 40 and 50°C, said temperature is measured on the surface of the surfaces which apply the heat to the first surface (20) and second surface (30).

15. The method as claimed in claim 14, wherein the minimum temperature for applying the temperature gradient is 120°C

16. The method as claimed in claim 14 or 15, wherein the maximum temperature for applying the temperature gradient is 180°C

17. The method as claimed in one or more of claims 14 to 16, wherein after applying the temperature gradient in step (iv), the nonwoven is finally consolidated in a heated oven, preferably an hot air oven, at elevated temperatures. Such elevated temperatures are between 200°C and 250°C The final thermal consolidation is performed at a higher temperature than in step (iv).

18. The method as claimed in claim 17, wherein the residence time within such heat oven/hot air oven is typically 10 sec to 60 sec

19. The method as claimed in claim 17 or 8, wherein during the final consolidation in the heated oven, preferably an hot air oven, no external force or pressure is applied during the final thermal consolidation.

20. Use of the single layer non-woven filter material as defined in claims 1 to 13 for the manufacture of a filter, preferably an oil filter.

21. A filter material as defined in claims 1 to 13 or the manufacture of a filter, preferably an oil filter.

22. An oil filter comprising the single layer non-woven filter material as defined in claims 1 to 13.
